# EUROPEAN PATENT SPECIFICATION

(11) **EP 3 124 916 B1**
(45) Date of publication and mention of the grant of the patent: **10.01.2018**
(21) Application number: 15769566.9
(22) Date of filing: 23.02.2015
(51) Int. Cl.: G01D 21/00, H04Q 9/00

(54) **SENSING SYSTEM**
SENSORSYSTEM
SYSTÈME DE DÉTECTION

(30) Priority: 28.03.2014 JP 2014069561
(43) Date of publication of application: 01.02.2017
(73) Proprietor: FUJIFILM Corporation, Tokyo 106-8620 (JP)
(72) Inventor: USAMI Yoshihisa, Ashigara-kami-gun Kanagawa 258-8577 (JP)
(74) Representative: Hoffmann Eitle
(86) International application number: PCT/JP2015/055047
(87) International publication number: WO 2015/146416

(56) References cited:
- WO-A1-00/45331
- WO-A1-2008/111727
- JP-A- 2005 018 175
- JP-A- 2006 105 808
- JP-A- 2006 338 552
- JP-A- 2009 538 433
- US-A1- 2007 258 048
- US-A1- 2009 055 120
- US-A1- 2011 301 903

## Description

### BACKGROUND OF THE INVENTION

### 1. Field of the Invention

The present invention relates to a sensing system that uses a sensor tag in which a sensor that measures at least one of a physical quantity and a chemical quantity is assembled in a wireless tag, an IC tag (electronic tag), a radio frequency identifier (RFID), or the like, and particularly, to a sensing system capable of performing measurement using a sensor even in a situation where a sensor tag cannot perform information exchange with an external device in which a correction value or the like is stored, without a complicated configuration although the sensor is assembled therein.

### 2. Description of the Related Art

In the related art, elements called a wireless tag, an IC tag, an RFID, or the like are used for various applications due to their small sizes and abilities of reading identification information in a non-contact manner. For example, techniques for measuring various physical quantities or chemical quantities by assembling a sensor such as a gas sensor, an ultrasound sensor, a humidity sensor, a moisture sensor, a temperature sensor, an optical sensor, a radiation sensor, a magnetic sensor, a pressure sensor, a pH sensor, a turbidity sensor, an altitude sensor, or an acceleration sensor in a wireless tag, an IC tag, an RFID, or the like, have been proposed.

However, since a circuit that forms a sensor has variation and thus an absolute value of a measurement value measured by the sensor varies, normally, recording of a correction value or assembly of a correction circuit is necessary, which complicates its configuration. Thus, even in a case where a sensor is assembled in a wireless tag, an IC tag, an RFID or the like, a simple configuration is required.

For example, JP2005-18175A discloses a sensor system that includes a sensor chip in which a sensor body, a memory that stores identification information, and a transmission unit that transmits at least detection data of the sensor body are integrated; and a signal processing unit including a reception unit that receives the detection data transmitted from the sensor chip, and a signal correction unit that corrects the detection data output from the reception unit according to the type of the sensor body. The signal correction unit has reference data corresponding to the sensor body, and compares the detection data output from the sensor chip with the reference data to correct the detection data. In JP2005-18175A, since the signal correction unit corrects the detection data according to the type of the sensor body, it is not necessary that a correction unit of the sensor body is assembled in the sensor chip.

WO00/45331 discloses another sensor system based on RFID to monitor perishable item in accordance to temperature and expiration date.

### SUMMARY OF THE INVENTION

However, as disclosed in JP2005-18175A, in a case where the signal correction unit that corrects detection data according to the type of the sensor body is provided outside the sensor chip, when information exchange cannot be performed between the sensor chip and the signal processing unit, for example, when communication is not possible, there is a problem in that the sensor cannot perform measurement. Thus, a technique capable of performing measurement using a sensor even in a case where a sensor chip and a signal processing unit cannot perform communication is required.

In order to solve the above problem, an object of the invention is to provide a sensing system capable of performing measurement using a sensor even in a situation where a sensor tag cannot perform information exchange with an external device in which a correction value or the like is stored, without a complicated configuration although the sensor is assembled therein.

According to an aspect of the invention, there is provided a sensing system comprising a sensor tag; a calculator; and a center, in which the sensor tag includes a sensor that measures at least one of a physical quantity and a chemical quantity, a memory that stores an expiration date and a correction coefficient value of the sensor, and individual recognition information, and a transmission unit that transmits a measurement value measured by the sensor and the individual recognition information, and the expiration date and the correction coefficient value of the sensor to the calculator, in which the center includes a storage unit that stores an expiration date and a correction coefficient value which are more accurate than the expiration date and the correction coefficient value stored in the memory of the sensor tag for each piece of individual recognition information, and a transmission unit that transmits the accurate expiration date and coefficient value depending on the individual recognition information to the calculator, in which the calculator includes a transmission unit that transmits the individual recognition information of the sensor tag to the center, a reception unit that receives the individual recognition information and the measurement value from the transmission unit of the sensor tag, and receives the accurate expiration date and correction coefficient value from the center, a determination unit that determines whether the accurate expiration date from the center has elapsed, and a processing unit that corrects the measurement value using the correction coefficient value from the center, and in which the calculator corrects the measurement value using the expiration date and the correction coefficient value of the sensor in the processing unit in a case where information exchange with the center cannot be performed.

It is preferable that the sensor tag includes a thin film transistor that includes a coating type semiconductor in a semiconductor active layer. Further, it is preferable that in the sensor tag, after the correction coefficient of the sensor is measured, the individual recognition information is written in the memory in a non-volatile manner.

It is preferable that the memory of the sensor tag is configured to be written with information only once.

According to the sensing system of the invention, it is possible to perform measurement using a sensor even in a case where a calculator cannot perform information exchange with a center in which a correction value or the like is stored, without a complicated configuration although the sensor is assembled therein.

### BRIEF DESCRIPTION OF THE DRAWINGS

Fig. 1 is a schematic diagram illustrating a configuration of a sensing system according to an embodiment of the invention.
Fig. 2 is a schematic diagram illustrating an example of a sensor tag used in the sensing system according to the embodiment of the invention.
Fig. 3 is a schematic diagram illustrating an example of a calculator used in the sensing system according to the embodiment of the invention.
Fig. 4 is a schematic diagram illustrating an example of a center used in the sensing system according to the embodiment of the invention.
Fig. 5A is a schematic sectional view illustrating a first example of a configuration of a thin film transistor that includes a coating type semiconductor used in the sensor tag according to the embodiment of the invention in a semiconductor active layer, and Fig. 5B is a schematic sectional view illustrating a second example of the configuration of the thin film transistor that includes the coating type semiconductor used in the sensor tag according to the embodiment of the invention in the semiconductor active layer.
Fig. 6 is a flowchart illustrating an example of temperature measurement in the sensing system according to the embodiment of the invention.

### DESCRIPTION OF THE PREFERRED EMBODIMENTS

Hereinafter, a sensing system of the invention will be described in detail based on preferred embodiments shown in the accompanying drawings.

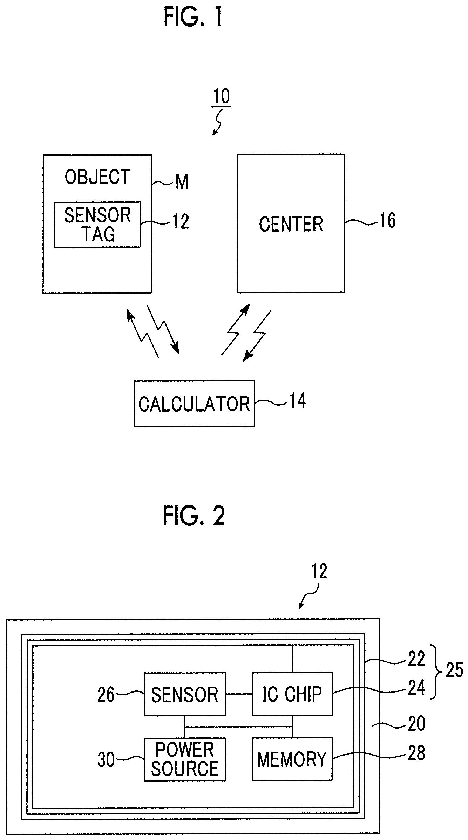

Fig. 1 is a schematic diagram illustrating a configuration of a sensing system according to an embodiment of the invention. Fig. 2 is a schematic diagram illustrating an example of a sensor tag used in the sensing system according to the embodiment of the invention.

A sensing system 10 shown in Fig. 1 includes a sensor tag 12 attached to an object M, a calculator 14, and a center 16.

The sensing system 10 may measure a variety of physical quantities or chemical quantities using the sensor tag 12 in which a sensor is assembled in a wireless tag, an IC tag (electronic tag), a radio frequency identifier (RFID), or the like.

The object M is a measurement object. The measurement object is an animal, a human, or the like in a case where a body temperature, a temperature of clothes, or the like is measured, and is food stuff such as meat, fish, or vegetables in a case where a temperature of refrigeration storage or freezing storage is measured. Further, in a case where a temperature of a solid matter or a liquid matter is measured, the solid matter or the liquid matter becomes the object M.

The sensor tag 12 has a function for measuring at least one of a physical quantity and a chemical quantity, and has a function for storing individual recognition information, that is, a so-called individual recognition number (ID) and transmitting the individual recognition information of the sensor tag 12, a measurement value measured by the sensor 26, and an expiration date and a correction coefficient of the sensor 26 to an external device. As the sensor tag 12, an active type sensor tag is used, for example.

Specifically, the sensor tag 12 shown in Fig. 2 includes an antenna 22 formed along a peripheral edge portion of an insulating substrate 20, an IC chip 24 which is connected to the antenna 22 and is provided on the substrate 20, a sensor 26, a memory 28, and a power source 30. The IC chip 24 forms a transmission unit 25 that transmits a variety of information in the sensor tag 12 to the calculator 14 in cooperation with the antenna 22. The IC chip 24 transmits a variety of information in the sensor tag 12 to the calculator 14 through the antenna 22 using the transmission unit 25 as electric waves. In the sensor tag 12 shown in Fig. 2, the transmission unit 25 is configured in a wireless manner using the antenna 22, but the invention is not limited thereto. The transmission unit 25 may be configured in a wired manner.

The transmission unit 25 also functions as a reception unit that receives information transmitted to the sensor tag 12 as described later.

The IC chip 24 includes a modulation circuit (not shown), a demodulation circuit (not shown), and an RF circuit (not shown), which form a packaged semiconductor integrated circuit. When transmitting the individual recognition information of the sensor tag 12, the measurement value of the sensor 26, and the expiration date and the correction coefficient of the sensor 26 to the calculator 14 through the antenna 22 as transmission data, the transmission data is converted into a form capable of being received in the calculator 14 using the modulation circuit. The modulation method is not particularly limited, and may employ various known methods.

Reception data received from the calculator 14 through the antenna 22 is converted into a form capable of being used in the memory 28 using the demodulation circuit. The demodulation method is not particularly limited, and may employ various known methods.

Further, the RF circuit is a circuit for transmitting a variety of internal information to the calculator 14 through the antenna 22. The RF circuit may appropriately employ a known circuit used in an IC tag, an RFID, or the like.

The sensor 26 measures at least one of a physical quantity and a chemical quantity. The sensor 26 is not particularly limited, but for example, may employ a gas sensor, an ultrasonic sensor, a humidity sensor, a moisture sensor, a temperature sensor, an optical sensor, a radiation sensor, a magnetic sensor, a pressure sensor, a pH sensor, a turbidity sensor, an altitude sensor, an acceleration sensor, or the like, for example. The number of sensors 26 is not limited to one, and the above-mentioned various sensors may be used in plural combination.

The memory 28 stores the expiration date and the correction coefficient value of the sensor 26, the measurement value measured by the sensor 26, and the individual identification information of the sensor tag 12. The memory 28 is configured by a non-volatile memory, for example. Further, the memory 28 may be a write-once memory capable of being written with information only once.

The power source 30 drives the modulation circuit, the demodulation circuit, and the RF circuit (high frequency circuit) of the IC chip 24, and is used for measurement of the sensor 26.

The IC chip 24 and the memory 28 are configured by plural transistors, and it is preferable that each transistor is configured by a thin film transistor (hereinafter, simply referred to as a coating type TFT) that includes a coating type semiconductor in a semiconductor active layer. Since the coating type TFT has an advantage that a temperature necessary for manufacturing is low and the TFT can be formed through printing, it is possible to realize a sensor tag using a resin substrate at low cost.

However, since the coating type TFT has a small amount of recording capacity, it is necessary that the amount of information to be stored is small. Thus, it is preferable that the expiration date and the correction coefficient value of the sensor 26, the individual recognition information of the sensor tag 12, and the measurement value measured by the sensor 26, stored in the memory 28, are stored with a small number of bits. The coating type TFT will be described in detail later.

Hereinafter, the calculator 14 will be described in detail.

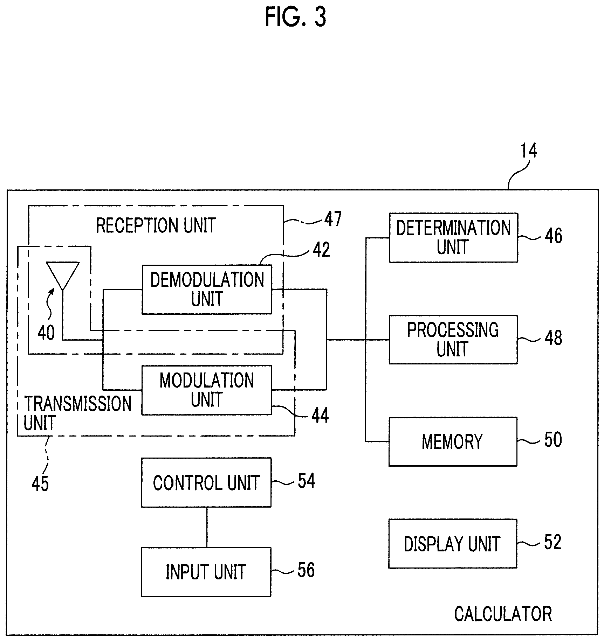

Fig. 3 is a schematic diagram illustrating an example of a calculator used in the sensing system according to the embodiment of the invention.

The calculator 14 includes an antenna 40, a demodulation unit 42, a modulation unit 44, a determination unit 46, a processing unit 48, a memory 50, a display unit 52, a control unit 54, and an input unit 56, as shown in Fig. 3. A transmission unit 45 is configured by the antenna 40 and the modulation unit 44. Further, a reception unit 47 is configured by the antenna 40 and the demodulation unit 42.

The antenna 40 is used for reception of a variety of information transmitted from the sensor tag 12 as radio waves and transmission of information to the center 16. As long as the antenna 40 can perform the above-mentioned function, its configuration is not particularly limited, and known various antennas may be used.

The demodulation unit 42 converts reception data received from the sensor tag 12 and the center 16 through the antenna 40 in a form capable of being used in the determination unit 46, the processing unit 48, and the memory 50. For example, the demodulation unit 42 converts the information about the accurate expiration date and correction coefficient value output from the center 16 into a form capable of being processed in the determination unit 46 and the processing unit 48, and into a form capable of being stored in the memory 50.

Further, the demodulation unit 42 converts the individual recognition information of the sensor tag 12 transmitted from the sensor tag 12, the measurement value measured by the sensor 26, the information about the expiration date and the correction coefficient value of the sensor 26 into a form capable of being processed in the determination unit 46 and the processing unit 48, and into a form capable of being stored in the memory 50. The demodulation method is not particularly limited, and may employ various known methods.

The modulation unit 44 converts the individual recognition information of the sensor tag 12 to be written in the memory 28 of the sensor tag 12 into a form capable of being received by the sensor tag 12 when transmitting the individual recognition information as transmission data. Further, when transmitting the individual recognition information of the sensor tag 12 to the center 16 as transmission data, the modulation unit 44 converts the transmission data into a form capable of being received by the center 16. The modulation method is not particularly limited, and may employ various known methods.

The determination unit 46 determines whether the expiration date of the sensor 26 of the sensor tag 12 received from the center 16 and the expiration date of the sensor 26 stored in the sensor tag 12 are valid at received date and time.

The processing unit 48 corrects the measurement value of the sensor 26 using the correction coefficient value from the center 16, and obtains a final measurement value in the sensor 26. Further, in a case where it is not possible to exchange information with the center 16, the processing unit 48 corrects the measurement value of the sensor 26 using the expiration date and the correction coefficient value of the sensor 26, and obtains a final measurement value of the sensor 26. In this case, since the correction coefficient value from the center 16 is not used, although measurement accuracy is low, it is possible to avoid a state where a measurement value cannot be obtained or measurement cannot be performed.

The memory 50 stores the above-described reception data and transmission data, the measurement value measured by the sensor 26 of the sensor tag 12, the individual recognition information of the sensor tag 12, and the like. As long as the memory 50 is a rewritable memory, its configuration is not particularly limited, and various known memories may be used.

The display unit 52 displays a result obtained by the calculator 14, or the like. For example, the display unit 52 displays the measurement value obtained by the sensor 26 as an image or characters. If there are plural objects, the display unit 52 displays the measurement value obtained by the sensor 26 for each object M. The display unit 52 may employ various display devices such as a liquid crystal display panel.

The control unit 54 controls respective components of the calculator 14.

The input unit 56 is a unit through which an instruction for setting various setting conditions or the like in the calculator 14 is input. As long as the input unit 56 can perform the above-described function, its configuration is not particularly limited, and a keyboard, a mouse, or the like may be used, or a touch panel may be used. In the calculator 14, the display unit 52 and the input unit 56 may not be provided.

The center 16 has a function for receiving the individual recognition information of the sensor tag 12 transmitted from the calculator 14, and a function for transmitting an expiration date and a correction coefficient value that are more accurate than the expiration date and the correction coefficient value stored in the memory 28 of the sensor tag 12 to the calculator 14, according to individual recognition information of the sensor tag 12.

Hereinafter, the center 16 will be described in detail.

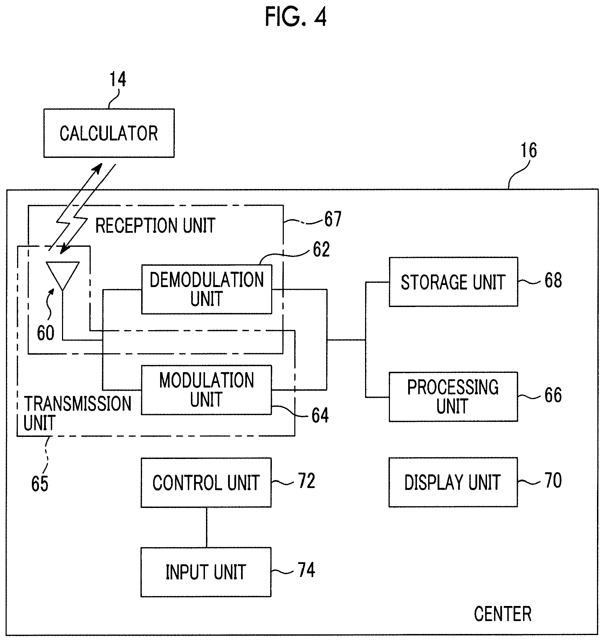

Fig. 4 is a schematic diagram illustrating an example of a center used in the sensing system according to the embodiment of the invention.

The center 16 includes an antenna 60, a demodulation unit 62, a modulation unit 64, a processing unit 66, a storage unit 68, a display unit 70, a control unit 72, and an input unit 74, as shown in Fig. 4. A transmission unit 65 is configured by the antenna 60 and the modulation unit 64. A reception unit 67 is configured by the antenna 60 and the demodulation unit 62.

The antenna 60 is used for transmission and reception with the calculator 14. As long as the antenna 60 can perform the above-described function, its configuration is not particularly limited, and various known antennas may be used.

The demodulation unit 62 converts reception data received from the calculator 14 through the antenna 60 into a form capable of being processed in the processing unit 66. For example, the demodulation unit 62 converts the individual recognition information of the sensor tag 12 transmitted from the calculator 14 into a form capable of being processed in the processing unit 66 and the storage unit 68. The demodulation method is not particularly limited, and may employ various known methods.

The modulation unit 64 converts information about an accurate expiration date and an accurate correction coefficient value into a form capable of being received by the calculator 14. The modulation method is not particularly limited, and may employ various known methods.

The processing unit 66 reads the information about the accurate expiration date and correction coefficient value stored in the storage unit 68 for each piece of individual recognition information, according to the individual recognition information from the calculator 14, and transmits the information about the accurate expiration date and correction coefficient value to the calculator 14.

In a case where it is not possible to perform information exchange with the calculator 14 due to malfunction of the device or the like, the center 16 cannot transmit the information about the accurate expiration date and correction coefficient value to the calculator 14.

The storage unit 68 stores the individual recognition information from the calculator 14 and the information about the accurate expiration date and correction coefficient value for each piece of individual recognition information. As long as the storage unit 68 is a rewritable memory, its configuration is not particularly limited, and various known memories may be used.

The display unit 70 displays the individual recognition information from the calculator 14, information about the calculator 14 that transmits the individual recognition information, the information about the accurate expiration date and correction coefficient value for each piece of individual recognition information, information about an accurate expiration date and an accurate correction coefficient value to be transmitted to the calculator 14, or the like. Further, if there are plural calculators 14, the display unit 70 displays the variety of information described above for each calculator 14. The display unit 70 may employ various display devices such as a liquid crystal display panel.

The control unit 72 controls respective components of the center 16.

The input unit 74 is a unit through which an instruction for setting various setting conditions in the center 16 is input. As long as the input unit 74 can perform the above-mentioned function, its configuration is not particularly limited, and a keyboard, a mouse, or the like may be used. In the center 16, the display unit 70 and the input unit 74 may not be provided.

In the sensing system 10, the calculator 14 transmits a test signal for communication establishment to the center 16, and the center 16 transmits a reply signal with respect to the test signal. In a case where the reply signal is received, it is determined that the communication is established, and in a case where the reply signal cannot be received, it is determined that the communication is not possible.

In the sensing system 10, the expiration date among the expiration date and the correction coefficient stored in the memory 28 of the sensor tag 12 is set in the unit of years, for example, 2015, 2017, 2019, or 2021. Further, the correction coefficient is set as an integer, for example, 1, 2, 3, or 4, which does not have a decimal part. In this way, it is possible to reduce the amount of information to be stored.

On the other hand, the expiration date and the correction coefficient stored in the storage unit 68 of the center 16 are more accurate than the expiration date and the correction coefficient stored in the memory 28 of the sensor tag 12. For example, the expiration date is set in the unit of months in a range of 2015 to 2022, for example. The correction coefficient is set at an interval of 0.1 in a range of 0.5 to 4.5, for example. In the center 16, since it is not necessary to reduce the amount of information to be stored, it is possible to set an accurate expiration date and an accurate correction coefficient.

The expiration date and the correction coefficient stored in the storage unit 68 of the center 16 are more accurate than the expiration date and the correction coefficient stored in the memory 28 of the sensor tag 12. The expiration date and the correction coefficient stored in the memory 28 of the sensor tag 12 are relatively more inaccurate than those of the center 16 due to restriction in the amount of information or the like. The inaccurate expiration date and correction coefficient is smaller in the number of bits in binary numbers by at least one digit compared with the accurate expiration date and correction coefficient. For example, if the inaccurate expiration date and correction coefficient have values of 2 bits, the accurate expiration date and correction coefficient have values of 3 bits. Compared the accurate expiration date and correction coefficient, it is preferable that the inaccurate expiration date and correction coefficient is smaller in the number of bits in binary numbers by at least eight digits, and it is more preferable that the inaccurate expiration date and correction coefficient is smaller in the number of bits in binary numbers by at least ten digits.

When the individual recognition number is added to the sensor tag 12 as the individual identification information, the individual recognition number is given using the following Table 1, for example.

When manufacturing the sensor tag 12, the correction coefficient of the sensor 26 is measured, and for example, an expiration date of October, 2017 and a correction coefficient of 0.6 are obtained. A combination of the numerical values is a combination of the accurate expiration date and correction coefficient stored in the center 16.

A first digit of an individual recognition number is given using the following Table 1. In Table 1, a first digit number is 5 when the expiration date is 2017. A first sensor tag 12 of which the first digit number is 5 is given 5001 with 4-digit numbers, and a second sensor tag 12 is given 5002.

**[Table 1]**

| Expiration date | Digit of Individual recognition number | | | |
|---|---|---|---|---|
| | 1 | 2 | 3 | 4 |
| 2015 | 1 | 2 | 3 | 4 |
| 2017 | 5 | 6 | 7 | 8 |
| 2019 | 9 | A | B | C |
| 2021 | D | E | F | 0 |

As described above, in a case where the calculator 14 cannot perform transmission and reception with the center 16, the expiration date becomes 2017. If usage date and time of the sensor tag 12 is prior to January first, 2017, for example, October 2016, a correction coefficient set in 2017 which is an inaccurate expiration date is used. Here, since the correction coefficient is inaccurate, for example, if temperature is measured, its measurement result of the temperature becomes 37°C or 38°C, and thus, it is not possible to obtain an accuracy corresponding to a decimal point. As the temperature, 37°C or 38°C is displayed.

On the other hand, in a case where the calculator 14 can perform transmission and reception with the center 16, it is possible to obtain the expiration date of October 2017 and the correction coefficient of 0.6 based on the individual recognition number. In this case, even in a case where the expiration date is January 1, 2017 and later, if the expiration date is prior to October 2017 stored in the center 16, it is possible to use the correction coefficient. A numerical value of the obtained temperature is 37.5°C or 38.5°C, for example, and thus, it is possible to obtain an accuracy corresponding to a decimal point. As the temperature, 37.5°C or 38.5°C is displayed, for example.

Hereinafter, a coating type TFT will be described.

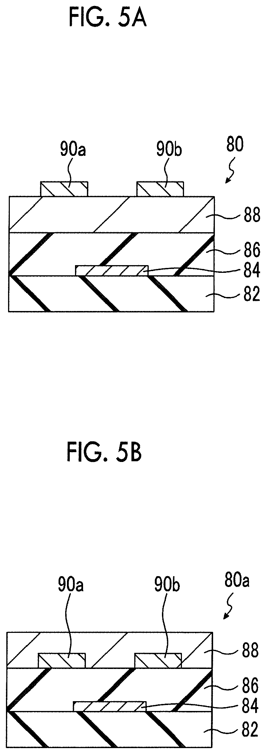

Fig. 5A is a schematic sectional view illustrating a first example of a configuration of a thin film transistor that includes a coating type semiconductor used in the sensor tag according to the embodiment of the invention in a semiconductor active layer, and Fig. 5B is a schematic sectional view illustrating a second example of the configuration of the thin film transistor that includes the coating type semiconductor used in the sensor tag according to the embodiment of the invention in the semiconductor active layer.

As described above, the coating type TFT includes the coating type semiconductor in the semiconductor active layer, and may further include a layer other than the semiconductor active layer.

The coating type TFT is preferably an organic field effect transistor (hereinafter, simply referred as an FET), and more preferably, an insulating gate type FET in which a space between a gate and a channel is insulated.

A structure of the coating type TFT is not particularly limited, and known various structures may be used.

As an example of the structure of the coating type TFT, a structure (bottom gate-top contact type) in which an electrode, an insulating layer, a semiconductor active layer (organic semiconductor layer), and two electrodes are sequentially formed on an upper surface of a bottom layer substrate may be used. In this structure, the electrode on the upper surface of the bottom layer substrate is provided in a portion of the substrate, and the insulating layer is disposed to be in contact with the substrate in a portion other than the portion where the electrode is provided. Further, two electrodes on an upper surface of the semiconductor active layer are disposed to be separated from each other.

A configuration of the bottom gate-top contact type element as the coating type TFT is specifically shown in Fig. 5A. A coating type TFT 80 shown in Fig. 5A is configured so that an insulating substrate 82 is formed on a bottom layer, a gate electrode 84 is provided in a portion of an upper surface of the substrate 82, and an insulating layer 86 that covers the gate electrode 84 and is provided to be in contact with the substrate 82 in a portion other than the portion where the gate electrode 84 is provided. Further, a semiconductor active layer 88 is provided on an upper surface of the insulating layer 86, and a source electrode 90a and a drain electrode 90b are disposed to be separated from each other in portions of an upper surface of the semiconductor active layer 88.

Instead of the coating type TFT 80 shown in Fig. 5A, a bottom gate-bottom contact type element may be used as the coating type TFT. A configuration of the bottom gate-bottom contact type element is shown in Fig. 5B. In a coating type TFT 80a shown in Fig. 5B, the same reference numerals are give to the same configurations as in the coating type TFT 80 shown in Fig. 5A, and accurate description thereof will not be repeated.

The coating type TFT 80a is configured so that an insulating substrate 82 is provided on a bottom lowest layer, a gate electrode in a portion on an upper surface of the substrate 82, and an insulating layer 86 that covers the gate electrode 84 and is disposed to be in contact with the substrate 82 in a portion other than the portion where the gate electrode 84 is provided. Further, a source electrode 90a and a drain electrode 90b are provided to be separated from each other in portions of an upper surface of the insulating layer 86. Further, a semiconductor active layer 88 is provided to cover the source electrode 90a and the drain electrode 90b and to be in contact with the insulating layer 86 in a portion other than the portions where the source electrode 90a and the drain electrode 90b are provided. Here, the source electrode 90a and the drain electrode 90b are disposed under the semiconductor active layer 88.

Both of the coating type TFT 80 shown in Fig. 5A and the coating type TFT 80a shown in Fig. 5B are insulating gate type FETs in which a space between a channel which is an electric current passage between a drain and a source, and the gate electrode 84 is insulated.

As a structure of the coating type TFT, a top gate-top contact type element in which an insulator and a gate electrode are disposed above a semiconductor active layer, or a top gate-bottom contact type element may be preferably used.

### (Thickness)

In the coating type TFTs 80 and 80a, in a case where a thinner transistor is demanded, for example, it is preferable to set the thickness of the entire transistor to 0.1 µm to 0.5 µm.

### (Sealing)

In order to shield the coating type TFTs 80 and 80a from air and moisture and to enhance storability of the coating type TFTs 80 and 80a, the entire coating type TFTs 80 and 80a may be sealed by a metal sealing can, or may be sealed by an inorganic material such as glass or silicon nitride, a high polymer material such as Parylene, or a low molecular material, for example.

Hereinafter, respective units of the coating type TFTs 80 and 80a will be described.

### <Substrate>

### (Material)

A material of the substrate is not particularly limited as long as it has an insulation characteristic, and various known materials may be used. For example, a polyester film such as polyethylene naphthalate (PEN) or polyethylene terephthalate (PET), a cyclo-olefin polymer film, a polycarbonate film, a triacetylcellulose (TAC) film, or a polyimide film may be used. Further, an ultrathin glass to which such a polymer film is attached, ceramics, silicon, quartz, glass or the like may be used as the material of the substrate. Particularly, it is preferable that silicon is used as the material of the substrate.

### <Various electrodes>

### (Material)

Ingredients of the gate electrode, the source electrode, and the drain electrode may employ a metallic material such as Cr, Al, Ta, Mo, Nb, Cu, Ag, Au, Pt, Pd, In, Ni, or Nd, or an alloy material thereof, for example. Further, the ingredients of the electrodes may employ known conductive material such as a carbon material or a conductive high polymer. That is, the ingredients may employ any conductive material.

### (Thickness)

The thicknesses of the gate electrode, the source electrode, and the drain electrode are not particularly limited, but it is preferable that the thickness is 10 nm to 50 nm.

A gate width (or channel width) W and a gate length (or channel length which is a distance between the source electrode and the drain electrode) L are not particularly limited, but it is preferable that a ratio W/L is equal to or greater than 10, and it is more preferable that the ratio is equal to or greater than 20.

### <Acceptor>

### (Material)

It is preferable that the coating type TFT includes an acceptor for prompting carrier injection. Known 2, 3, 5, 6-tetrafluoro-7, 7, 8, 8-tetracyanoquinodimethane (F4-TCNQ), or the like may be preferably used as its material.

### (Thickness)

The thickness of the acceptor is not particularly limited, but it is preferable that the thickness is equal to or smaller than 5 nm.

### <Insulating layer>

### (Material)

As long as a material that forms an insulating layer can obtain a necessary insulating effect, the material is not particularly limited. For example, an acrylic polymer-based insulating material such as silicon dioxide, silicon nitride, polytetrafluoroethylene (PTFE), or CYTOP (registered trademark), a polyester insulating material, a polycarbonate insulating material, an acrylic polymer-based insulating material, an epoxy resin-based insulating material, a polyimide insulating material, a polyvinyl phenol resin-based insulating material, a polyimide insulating material, a polyvinyl phenol resin-based insulating material, a polyparaxylylene resin-based insulating material, or the like may be used as the material.

An upper surface of the insulating layer may undergo surface treatment. For example, an insulating layer obtained by performing surface treatment with respect to a surface of silicon dioxide by coating of hexamethyldisilazane (HMDS), octadecyltrichlorosilane (OTS), or β-phenethyltrimethoxysilane may be preferably used, and an insulating layer obtained by performing surface treatment with respect to the surface by coating of β-phenethyltrimethoxysilane may be more preferably used.

### (Thickness)

The thickness of the insulating layer is not particularly limited, but in a case where a thinner layer is demanded, the thickness is preferably 10 nm to 500 nm, more preferably 20 nm to 200 nm, and most preferably 50 nm to 200 nm.

### <Semiconductor active layer>

### (Material)

In the coating type TFT, the following organic semiconductor compound may be used as a compound included in a semiconductor active layer capable of being formed by a coating method.

The organic semiconductor compound employs polycyclic aromatic hydrocarbon such as pentacene, anthracene or rubrene, a low molecular compound such as tetracyanoquinodimethane, or a polymer such as polyacetylene, polypyrrole, polyaniline, poly-3-hexylthiophene or polyparaphenylene vinylene.

The semiconductor active layer may further include a polymer binder in addition to the above-mentioned organic semiconductor compound. Further, the semiconductor active layer may include a residual solvent when the semiconductor active layer is formed.

The content of a polymer binder in the semiconductor active layer is not particularly limited, but is preferably in a range of 0 to 95 mass %, more preferably in a range of 10 to 90 mass %, more preferably in a range of 20 to 80 mass %, and most preferably in a range of 30 to 70 mass %.

### (Thickness)

The thickness of the semiconductor active layer is not particularly limited, but in a case where a thinner layer is demanded, the thickness is preferably 10 to 400 nm, more preferably 10 to 200 nm, and most preferably 10 to 100 nm.

### (Formation)

The semiconductor active layer may be formed by a coating method.

Next, management using the sensing system 10 will be described.

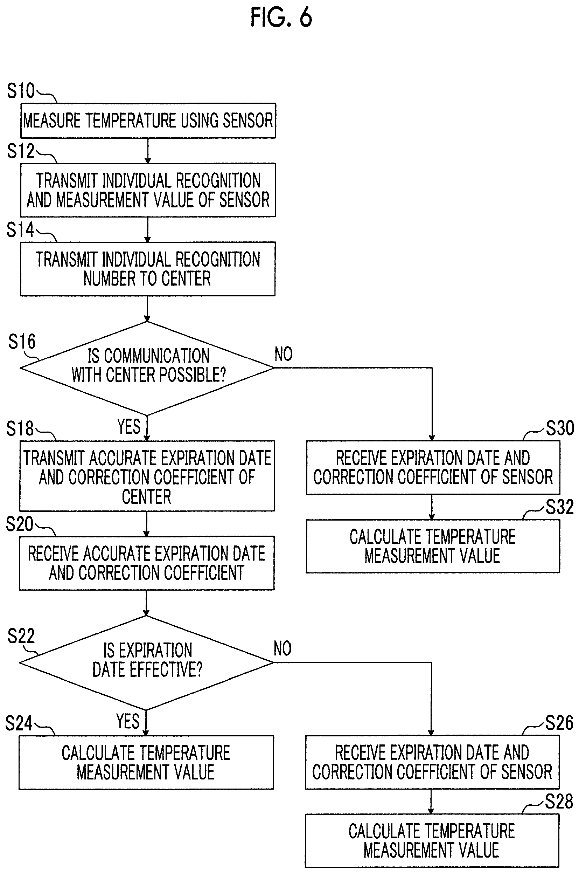

Fig. 6 is a flowchart illustrating an example of temperature measurement in the sensing system according to the embodiment of the invention.

The sensor tag 12 is attached to an object M. Temperature measurement of food stuff in a case where the object M is food stuff and the food stuff is stored in a refrigerator will be described as an example. In this case, the sensor tag 12 includes a temperature sensor as the sensor 26. An expiration date and a correction coefficient are calculated with respect to the temperature sensor in advance, and the expiration data and the correction coefficient of the temperature sensor are stored in the memory 28. Further, the memory 28 of the sensor tag 12 stores an individual recognition number as individual recognition information.

First, the sensor tag 12 is attached to food stuff which is the object M, and is stored in the refrigerator. An individual recognition number is given to the sensor tag 12, and the expiration date and the correction coefficient of the sensor 26 are stored in the sensor tag 12. Further, an accurate expiration date and an accurate correction coefficient are stored in the center 16.

Then, temperature measurement is performed by the sensor 26 (step S10). Further, a temperature measurement value is obtained by the sensor 26. The individual recognition number and the temperature measurement value of the sensor 26 are transmitted from the sensor tag 12 to the calculator 14 as the individual recognition information (step S12). The calculator 14 transmits information about the received individual recognition number to the center 16 (step S14).

Then, communication with the center 16 is checked (step S16). In this case, the calculator 14 transmits a test signal for communication establishment to the center 16. In a case where a reply signal with respect to the test signal is present from the center 16, it is determined that the communication is established. On the other hand, in a case where the reply signal cannot be received, that is, in a case where information exchange between the calculator 14 and the center 16 cannot be performed, it is determined that the communication is not possible.

In a case where the communication with the center 16 can be established in step S16, the center 16 transmits an expiration date and a correction coefficient which are more accurate than those stored in the sensor tag 12 to the calculator 14 according to the individual recognition number (step S18).

Then, the calculator 14 receives the accurate expiration date and correction coefficient (step S20). Further, the calculator 14 determines whether the expiration date is effective (step S22). If the expiration date is effective, the calculator 14 performs correction using the correction coefficient to calculate a final temperature measurement value (step S24). On the other hand, if the expiration date elapses, the calculator 14 causes the sensor tag 12 to transmit an expiration date and a correction coefficient of the sensor 26, and receives the expiration date and the correction coefficient (step S26). Further, the calculator 14 performs correction using the correction coefficient of the sensor tag 12 to calculate a final temperature measurement value (step S28). The temperature measurement value has a low correction accuracy and a small amount of digit numbers in valid number, compared with a case where the accurate expiration date and correction coefficient are used. The temperature measurement value is displayed on the display unit 52 of the calculator 14 or the display unit 70 of the center 16, for example.

In step S16, in a case where the communication with the center 16 is not possible, the calculator 14 causes the sensor tag 12 to transmit an expiration date and a correction coefficient of the sensor 26, and receives the expiration date and the correction coefficient (step S30). Further, the calculator 14 performs correction using the correction coefficient of the sensor tag 12 to calculate a final temperature measurement value (step S32). The temperature measurement value has a low correction accuracy and a small amount of digit numbers in valid number, compared with a case where the accurate expiration date and correction coefficient are used. The temperature measurement value is displayed on the display unit 52 of the calculator 14 or the display unit 70 of the center 16, for example.

In this way, the sensing system 10 can detect the temperature of food stuff in a refrigerator. If the temperature measurement is performed at equal intervals, for example, every hour, it is possible to detect a temperature change of the food stuff in the refrigerator. Further, in a case where the object M is an animal or a human, it is possible to detect a change of a body temperature. By changing the sensor 26 from a temperature sensor to a different type of sensor, it is possible to measure a different physical quantity or chemical quantity. Further, although an expiration date and a correction coefficient of the sensor 26 are stored in the sensor tag 12, since the amount of information thereof is small, it is not necessary to increase a memory capacity of the sensor tag 12. Thus, even though the expiration date and the correction coefficient of the sensor 26 are stored, the configuration of the sensor tag 12 does not become complicated.

Further, by causing the center 16 to store an accurate expiration date and an accurate correction coefficient and using the correction coefficient of the center 16, it is possible to calculate a measurement value with higher accuracy.

Further, even when the calculator 14 and the center 16 cannot perform communication in any situation, by using the correction coefficient of the sensor tag 12, it is possible to avoid a case where a measurement value cannot be obtained although the accuracy of measurement is low.

Furthermore, by storing the expiration date of the sensor 26, it is possible to enhance reliability with respect to a measurement value obtained by the sensor 26.

The invention is basically configured as described above. Hereinbefore, the sensing system of the invention has been described in detail, but the invention is not limited to the embodiments, and various improvements or modifications may be made in a range without departing from the concept of the invention as defined by the appended claims.

### Explanation of References

10: sensing system
12: sensor tag
14: calculator
16: center
20: substrate
22, 40, 60: antenna
24: IC chip
26: sensor
28, 50: memory
30: power source
42, 62: demodulation unit
44, 64: modulation unit
46: determination unit
48, 66: processing unit
52, 70: display unit
54, 72: control unit
56, 74: input unit
68: storage unit

## Claims

1. A sensing system (10) comprising:
a sensor tag (12);
a calculator (14); and
a center (16),
wherein the sensor tag (12) includes
a sensor (26)
that measures at least one of a physical quantity and a chemical quantity,
a memory (28) that stores an expiration date and a correction coefficient value of the sensor, and individual recognition information, and
a transmission unit (25) that transmits a measurement value measured by the sensor (26) and the individual recognition information, and the expiration date and the correction coefficient value of the sensor (26) to the calculator (14),
wherein the centrer (16) includes
a storage unit (68) that stores an expiration date and a correction coefficient value which are more accurate than the expiration date and the correction coefficient value stored in the memory (28) of the sensor tag (12) for each piece of individual recognition information, and
a transmission unit (65) that transmits the accurate expiration date and coefficient value depending on the individual recognition information to the calculator (14),
wherein the calculator (14) includes
a transmission unit (45) that transmits the individual recognition information of the sensor tag (12) to the center (16),
a reception unit (47) that receives the individual recognition information and the measurement value from the transmission unit (25) of the sensor tag(12), and receives the accurate expiration date and correction coefficient value from the center (16),
a determination unit (46) that determines whether the accurate expiration date from the center (16) has elapsed, and
a processing unit (48) that corrects the measurement value using the correction coefficient value from the center (16), and
wherein the calculator (14) corrects the measurement value using the expiration date and the correction coefficient value of the sensor (26) in the processing unit (48) in a case where information exchange with the center (16) cannot be performed.

2. The sensing system according to claim 1,
wherein the sensor tag includes a thin film transistor that includes a coating type semiconductor in a semiconductor active layer.

3. The sensing system according to claim 1 or 2,
wherein in the sensor tag, after the correction coefficient of the sensor is measured, the individual recognition information is written in the memory in a non-volatile manner.

4. The sensing system according to any one of claims 1 to 3,
wherein the memory of the sensor tag is configured to be written with information only once.

## Patentansprüche

1. Sensorsystem (10), umfassend:
ein Sensor-Tag (12);
einen Rechner (14); und
ein Zentrum (16),
wobei das Sensor-Tag (12) Folgendes aufweist:
einen Sensor (26),
der zumindest eines von einer physikalischen Größe und einer chemischen Größe misst,
einen Speicher (28), der ein Ablaufdatum und einen Korrekturkoeffizientenwert des Sensors und einzelne Erkennungsinformationen speichert, und
eine Übertragungseinheit (25), die einen durch den Sensor (26) gemessenen Messwert und die einzelnen Erkennungsinformationen sowie das Ablaufdatum und den Korrekturkoeffizientenwert des Sensors (26) an den Rechner (14) überträgt,
wobei das Zentrum (16) eine Speichereinheit (68) aufweist, die ein Ablaufdatum und einen Korrekturkoeffizientenwert, die genauer sind als das Ablaufdatum und der Korrekturkoeffizientenwert, die auf dem Speicher (28) des Sensor-Tags (12) gespeichert sind, für jede einzelne Erkennungsinformation speichert, und
eine Übertragungseinheit (65), die das genaue Ablaufdatum und den genauen Koeffizientenwert in Abhängigkeit von den einzelnen Erkennungsinformationen an den Rechner (14) überträgt,
wobei der Rechner (14) Folgendes aufweist
eine Übertragungseinheit (45), die die einzelnen Erkennungsinformationen des Sensor-Tags (12) an das Zentrum (16) überträgt,
eine Empfangseinheit (47), die die einzelnen Erkennungsinformationen und den Messwert von der Übertragungseinheit (25) des Sensor-Tags (12) empfängt und das genaue Ablaufdatum und den genauen Korrekturkoeffizientenwert aus dem Zentrum (16) empfängt,
eine Ermittlungseinheit (46), die ermittelt, ob das genaue Ablaufdatum aus dem Zentrum (16) vergangen ist, und
eine Verarbeitungseinheit (48), die den Messwert unter Verwendung des Korrekturkoeffizientenwerts aus dem Zentrum (16) korrigiert, und
wobei der Rechner (14) den Messwert unter Verwendung des Ablaufdatums und des Korrekturkoeffizientenwerts des Sensors (26) in der Verarbeitungseinheit (48) in einem Fall korrigiert, in dem der Informationsaustausch mit dem Zentrum (16) nicht durchgeführt werden kann.

2. Sensorsystem nach Anspruch 1,
wobei das Sensor-Tag einen Dünnschichttransistor aufweist, der einen Halbleiter des Beschichtungstyps in einer Halbleiteraktivschicht aufweist.

3. Sensorsystem nach Anspruch 1 oder 2,
wobei in dem Sensor-Tag nach dem Messen des Korrekturkoeffizienten des Sensors die einzelnen Erkennungsinformationen dem Speicher permanent eingeschrieben werden.

4. Sensorsystem nach einem der Ansprüche 1 bis 3,
wobei der Speicher des Sensor-Tags konfiguriert ist, nur einmal mit Informationen eingeschrieben zu werden.

## Revendications

1. Système de détection (10) comprenant :
une étiquette capteur (12) ;
un calculateur (14) ; et
un centre (16),
dans lequel l'étiquette capteur (12) inclut
un capteur (26)
qui mesure au moins l'une parmi une quantité physique et une quantité chimique,
une mémoire (28)
qui stocke une date d'expiration et une valeur de coefficient de correction du capteur, et des informations de reconnaissance individuelles, et
une unité de transmission (25) qui transmet une valeur de mesure mesurée par le capteur (26) et
les informations de reconnaissance individuelles, et la date d'expiration et la valeur de coefficient de correction du capteur (26) au calculateur (14),
dans lequel le centre (16) inclut
une unité de stockage (68)
qui stocke une date d'expiration et une valeur de coefficient de correction qui sont plus précises que la date d'expiration et la valeur de coefficient de correction stockées dans la mémoire (28) de l'étiquette capteur (12) pour chaque information de reconnaissance individuelle, et
une unité de transmission (65)
qui transmet la date d'expiration et la valeur de coefficient précises en fonction des informations de reconnaissance individuelles au calculateur (14),
dans lequel le calculateur (14) inclut
une unité de transmission (45)
qui transmet les informations de reconnaissance individuelles de l'étiquette capteur (12) au centre (16),
une unité de réception (47)
qui reçoit les informations de reconnaissance individuelles et la valeur de mesure en provenance de l'unité de transmission (25) de l'étiquette capteur (12),
et reçoit la date d'expiration et la valeur de coefficient de correction précises en provenance du centre (16),
une unité de détermination (46)
qui détermine si la date d'expiration précise en provenance du centre est passée, et
une unité de traitement (48)
qui corrige la valeur de mesure en utilisant la valeur de coefficient de correction en provenance du centre (16), et
dans lequel le calculateur (14)
corrige la valeur de mesure en utilisant la date d'expiration et la valeur de coefficient de correction du capteur (26) dans l'unité de traitement (48) dans un cas où l'échange d'informations avec le centre (16) ne peut être effectué.

2. Système de détection selon la revendication 1,
dans lequel l'étiquette capteur inclut un transistor en couches minces qui inclut un semi-conducteur de type revêtement dans une couche active de semi-conducteur.

3. Système de détection selon la revendication 1 ou 2,
dans lequel dans l'étiquette capteur, après que le coefficient de correction du capteur est mesuré, les informations de reconnaissance individuelles sont écrites dans la mémoire de manière non volatile.

4. Système de détection selon l'une quelconque des revendications 1 à 3,
dans lequel la mémoire de l'étiquette capteur est configurée pour que les informations y soient écrites une fois uniquement.
